# FASCICULE DE BREVET EUROPEEN

(11) **EP 4 041 535 B1**
(45) Date de publication et mention de la délivrance du brevet: **02.12.2026**
(21) Numéro de dépôt: 20793761.6
(22) Date de dépôt: 07.10.2020
(51) Int. Cl.: B29C 70/38, B29C 70/54

(54) **MACHINE DE DRAPAGE ET DE COMPACTAGE AUTOMATIQUE**
AUTOMATISCHE AUFLEGE- UND VERDICHTUNGSMASCHINE
AUTOMATIC LAYUP AND COMPACTING MACHINE

(30) Priorité: 08.10.2019 FR 1911124
(43) Date de publication de la demande: 17.08.2022
(73) Titulaire: Safran Nacelles, 76700 Gonfreville-l'Orcher (FR)
(72) Inventeur: ROLLAND, Clément, 77550 MOISSY-CRAMAYEL (FR); PROVOST, Benjamin, 77550 MOISSY-CRAMAYEL (FR); LEBEGUE, Maxime, 77550 MOISSY-CRAMAYEL (FR); VENTURE, Renaud, 77550 MOISSY-CRAMAYEL (FR)
(74) Mandataire: Cabinet Beau de Loménie
(86) Numéro de dépôt international: PCT/FR2020/051765
(87) Numéro de publication internationale: WO 2021/069835

(56) Documents cités:
- EP-A2- 2 626 181
- DE-U1- 202014 103 132
- US-A- 5 074 948
- US-B2- 9 969 131

## Description

### Domaine Technique

La présente invention concerne la fabrication de pièces en matériaux composites par drapage des plis sur un support de drapage. L'invention concerne plus particulièrement une machine permettant un drapage et un compactage automatique de plis.

### Technique antérieure

Des machines de drapage automatique dites « pick and place » sont connues comme celle décrite dans le document US 9 873 230. Ces machines comprennent une tête de drapage montée sur un dispositif de manipulation robotisé. La machine de drapage est programmée pour commander les mouvements de la tête de drapage suivant trois opérations : une opération de saisie automatique d'un pli fibreux, une opération de déplacement automatique du pli à une position déterminée sur un support de drapage, puis une opération de relâche ou détachement du pli à l'endroit ciblé (« pick and place »). Ces trois opérations sont répétées pour tous les plis constituant la préforme de la pièce en matériau composite à fabriquer. Lors de chaque détachement d'un pli sur le support de drapage, celui-ci doit être compacté afin notamment de chasser l'air présent sous le pli pour lui garantir un conformage correct et un taux de porosité minimal. A cet effet, la machine de drapage peut comprendre des dispositifs supplémentaires extérieurs pour réaliser le compactage.

Le document DE202014103132U1 décrit une machine de drapage et de compactage selon le préambule de la revendication 1.

En outre de nécessiter un dispositif supplémentaire pour le compactage des plis déposés, les machines de drapage de l'art antérieur ne proposent pas de solutions fiables pour assurer un compactage précis et homogène sur l'ensemble des plis en particulier lorsque la surface du support de drapage présente une géométrie complexe.

### Exposé de l'invention

La présente invention a pour but de remédier aux inconvénients précités et de proposer une solution qui permet de réaliser le compactage directement avec la tête de drapage, et ce avec un contrôle de la force ou pression d'appui de la tête sur le support de drapage.

A cet effet, l'invention propose une machine de drapage et de compactage automatique de plis selon la revendication 1.

Avec la machine de l'invention, il est ainsi possible de placer et compacter automatiquement avec un effort en consigne des plis sur un support de drapage quelle que soit sa géométrie. Grâce aux éléments de mesure de force ou pression d'appui, il est possible de mesurer la force d'appui appliquée par la tête en plusieurs endroits de celle-ci. L'effort de compactage peut être ainsi contrôlé et corrigé localement par le biais d'une programmation et d'un asservissement afin de réaliser un compactage satisfaisant sur l'ensemble du pli déposé.

Selon l'invention, des éléments de mesure de force ou pression d'appui sont répartis sur la zone de couplage entre les premier et deuxième supports rigides.

Selon une caractéristique particulière de la machine de l'invention, les éléments de mesure de force ou pression d'appui correspondent à des capteurs de force.

Selon l'invention, des dispositifs de déplacement linéaire sont présents dans la zone de couplage entre les premier et deuxième supports rigides, chaque dispositif de déplacement linéaire comprenant un capteur de position correspondant à un élément de mesure de force ou pression d'appui.

Selon une autre caractéristique particulière de la machine de l'invention, le premier support rigide comprend une pluralité de bras chacun reliés à une extrémité au dispositif de manipulation et à une autre extrémité au deuxième support rigide, chaque bras comprenant un élément de mesure de force ou pression d'appui. Selon une autre caractéristique particulière de la machine de l'invention, l'unité de commande est configurée pour ajuster la force d'appui de compactage de la tête de drapage sur la surface du support de drapage en fonction d'une force d'appui cible. Il est ainsi notamment possible de limiter la force d'appui appliquée dans le cas d'un drapage et d'un compactage sur un support fragile.

Selon une autre caractéristique particulière de la machine de l'invention, l'unité de commande ajuste la force d'appui de compactage en fonction de la force d'appui mesurée par un ou plusieurs éléments de mesure déterminés. Il est ainsi possible de cibler localement l'application d'une force ou d'un effort de compactage afin par exemple d'assurer un compactage de l'ensemble d'un pli sur une surface de géométrie complexe.

### Brève description des dessins

[Fig. 1] La figure 1 est une vue schématique d'une machine de drapage et de compactage automatique de plis fibreux conformément à l'invention,
[Fig. 2] La figure 2 est une vue schématique en coupe montrant la tête de drapage de la machine de la figure 1,
[Fig. 3] La figure 3 est une vue en coupe selon le plan II-II de la tête de drapage de la figure 2,
[Fig. 4] La figure 4 est une vue schématique en coupe d'une tête de drapage selon l'invention,
[Fig. 5] La figure 5 est une vue en coupe selon le plan IV-IV de la tête de drapage de la figure 4,
[Fig. 6] La figure 6 est une vue schématique en perspective d'une tête de drapage selon un autre mode de réalisation,
[Fig. 7A-7C] Les figures 7A à 7C sont des exemples de placement d'un patch sur une surface complexe via une tête de drapage,
[Fig. 8A-8B] Les figures 8A et 8B montrent l'amélioration avec une machine selon l'invention lors de l'application d'un effort de compactage sur une surface concave,
[Fig. 9A-9B] Les figures 9A et 9B montrent l'amélioration avec une machine selon l'invention lors de l'application d'un effort de compactage sur une surface convexe.

### Description des modes de réalisation

L'invention s'applique d'une manière générale au placement et au compactage automatique de plis sur un support de drapage de géométrie quelconque. Par « plis », on entend ici des plis fibreux correspondant notamment à des strates fibreuses tissées ou non et comprenant indifféremment des fibres continues, longues ou courtes, les plis fibreux pouvant être « secs » (absence de résine), poudreux (charges particulaires) ou pré-imprégnés (d'une résine). On entend également ici par « plis » des couches précurseurs de matrice telles que des couches de matériaux polymères comme des matériaux thermoplastiques ou thermodurcissables.

Par « support de drapage », on entend ici tout type de support et notamment un moule de polymérisation (en matériau métallique ou thermoplastique), des plis polymérisés ou non, ou encore des matériaux d'âmes tels que des nids d'abeille en aluminium ou en fibres synthétiques (Nomex^{®}), ou des mousses polymères typiquement rencontrés dans les structures composites « sandwich ».

L'invention trouve une application particulière dans la fabrication de pièces en matériau composite par drapage et compactage de plis fibreux secs ou pré-imprégnés d'une résine thermodurcissable ou thermoplastique sur la surface d'un support de drapage.

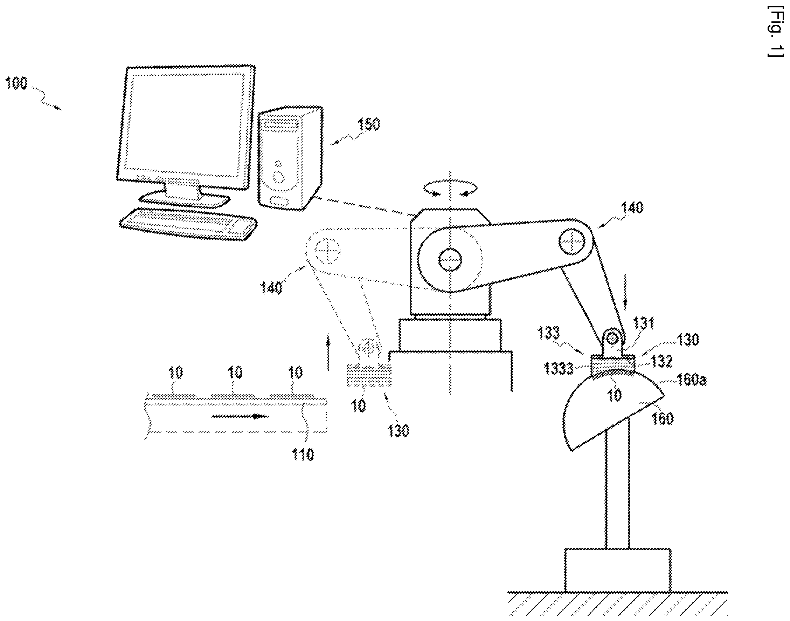

La figure 1 représente une machine de drapage et de compactage automatique 100 selon l'invention. La machine 100 comprend un dispositif d'alimentation de plis 110, une tête de drapage 130 montée sur un dispositif de manipulation robotisé 140 et une unité de commande 150 configurée (programmée) pour commander les mouvements de la tête de drapage 130. L'unité 150 commande via le dispositif de manipulation robotisé les mouvements de la tête de drapage pour notamment saisir, déposer et compacter les plis 10 sur un support de drapage 160. Comme illustrée sur les figures 1 à 3, la tête de drapage 130 comprend un premier support rigide 131 relié au dispositif de manipulation robotisé 140 et un deuxième support rigide 132 relié, d'une part, au premier support rigide 131 et, d'autre part, à un préhenseur 133 comprenant une pièce de matériau élastiquement déformable 1333 présentant au moins une face 1333a apte à saisir chaque pli 10 et à le placer en appui contre la surface 160a du support de drapage 160. A cet effet, la pièce de matériau élastiquement déformable 1333 présente un réseau de porosité ou de canaux reliés à un dispositif de succion (non représenté sur les figures 1 à 3) permettant la saisie des plis et le placement sur le support de drapage 160, le dispositif de succion pouvant en outre comprendre un moyen de soufflage pour faciliter la séparation des plis fibreux avec la pièce en matériau élastiquement déformable une fois les plis positionnés et compactés sur la surface du moule de drapage.

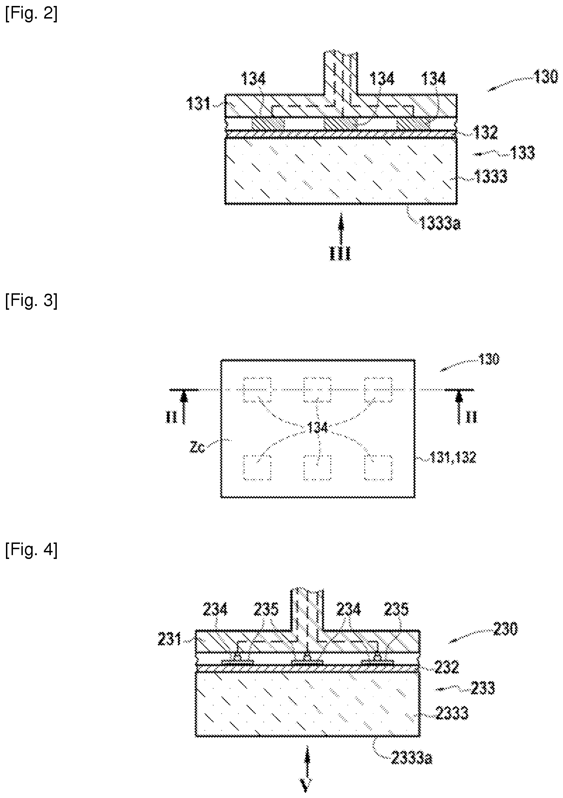

Conformément à l'invention et telle qu'illustrée sur les figures 2 et 3, la tête de drapage 130 comprend en outre une pluralité d'éléments de mesure de force ou pression d'appui 134 interposés entre les premier et deuxième supports rigides 131 et 132. Dans l'exemple décrit ici, les éléments de mesure de force ou pression d'appui 134 correspondent à des capteurs de force ou d'effort par exemple de type à jauges de déformation ou piézoélectrique. Les éléments de mesure de force ou pression d'appui 134 sont répartis sur la zone de couplage Zc définie entre les premier et deuxième supports rigides 131 et 132. Dans ce mode de réalisation, l'effort de compactage est exercé par le dispositif de manipulation robotisé 140. L'unité de commande 150 est reliée aux éléments de mesure de force ou pression d'appui 134 afin de contrôler la force d'appui de compactage appliquée par la tête de drapage 130 comme expliqué en détails ci-après.

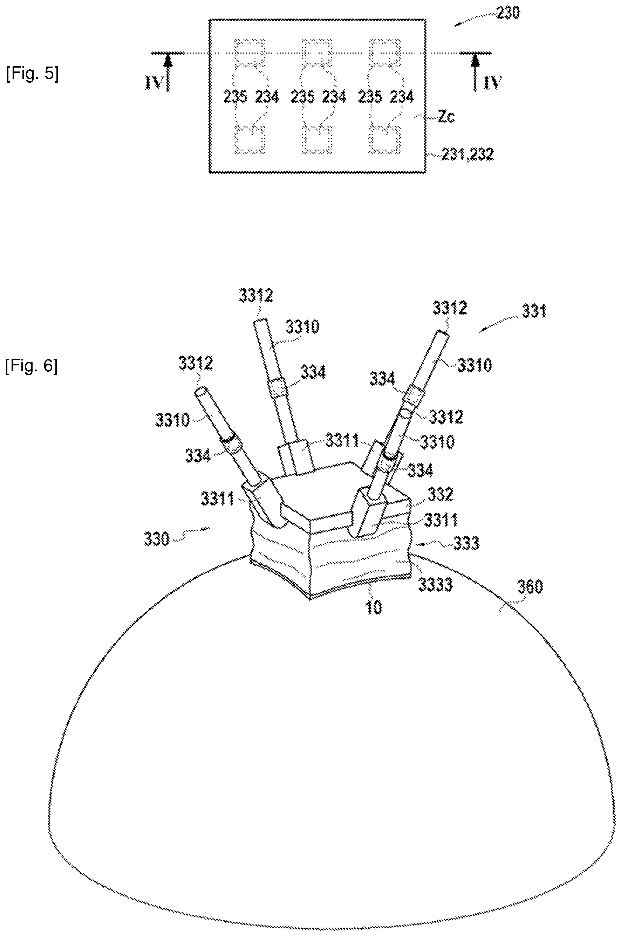

Les figures 4 et 5 illustrent une tête de drapage 230 conformément à l'invention. Comme la tête de drapage 130, la tête de drapage 230 comprend un premier support rigide 231 destiné à être relié à un dispositif de manipulation robotisé comme celui déjà décrit précédemment en relation avec la figure 1 et un deuxième support rigide 232 relié, d'une part, au premier support rigide 231 et, d'autre part, à un préhenseur 233 comprenant une pièce de matériau élastiquement déformable 2333 ayant une face 2333a apte à saisir chaque pli et à le placer en appui contre la surface du moule de drapage. Des dispositifs de déplacement linéaire 235 (tels que des vérins, des piézoélectriques, des crémaillères, des vis sans fin, etc.) sont présents dans la zone de couplage Zc entre les premier et deuxième supports rigides 231 et 232. Les dispositifs de déplacement linéaire 235 sont reliés à l'unité de commande de la machine de drapage et de compactage automatique qui contrôle le mouvement de chaque dispositif de déplacement linéaire. L'effort de compactage est exercé notamment par les dispositifs de déplacement linéaire 235. L'effort exercé par les dispositifs de déplacement linéaire peut être combiné avec l'effort exercé par le dispositif de manipulation robotisé pour le compactage des plis fibreux. Chaque dispositif de déplacement linéaire 235 comprend un capteur de position 234 correspondant à un élément de mesure de force ou pression d'appui. L'unité de commande est reliée aux capteurs de position de chaque vérin afin de contrôler la force d'appui de compactage appliquée par la tête de drapage 230 comme expliqué en détails ci-après.

La figure 6 illustre une tête de drapage 330 conformément à un autre mode de réalisation de l'invention. La tête de drapage 330 diffère des têtes de drapage 130 et 230 décrites précédemment en ce que le premier support rigide 331 comprend des bras 3310 comportant chacun une première extrémité 3311 reliée à un deuxième support rigide 332 et une deuxième extrémité 3312 reliée à un dispositif de manipulation robotisé (non représenté sur la figure 6). Le deuxième support rigide 332 est en outre relié à un préhenseur 333 comprenant une pièce de matériau élastiquement déformable 3333 apte à saisir des plis 10 et à les placer en appui contre la surface d'un support de drapage 360. Dans ce mode de réalisation, la tête de drapage 330 comprend en outre une pluralité d'éléments de mesure de force ou pression d'appui 334 chacun logés dans un bras 3310. Dans l'exemple décrit ici, les éléments de mesure de force ou pression d'appui 334 correspondent à des capteurs de force ou d'effort par exemple de type à jauges de déformation ou piézoélectrique. Dans ce mode de réalisation, l'effort de compactage est exercé par le dispositif de manipulation robotisé. L'unité de commande de la machine est reliée aux éléments de mesure de pression d'appui 334 afin de contrôler la force d'appui de compactage appliquée par la tête de drapage 330 comme expliqué en détails ci-après.

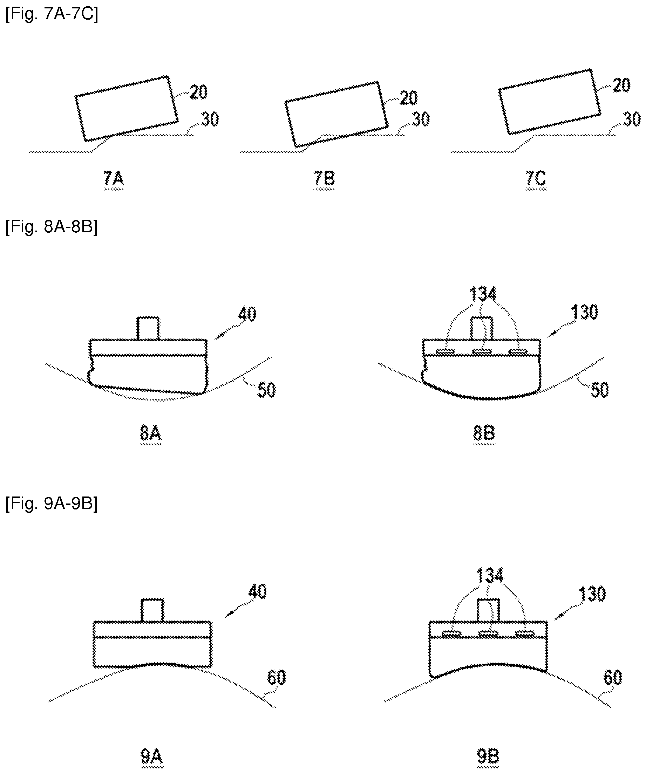

Avec une tête de drapage munie d'éléments de mesure de force ou pression d'appui reliés à une unité de commande, la machine de drapage et de compactage de l'invention permet d'assurer un contact avec une surface d'un support de drapage et ce avec une force d'appui déterminée et quelle que soit la géométrie de la surface à draper. La figure 7A illustre le contact théorique programmé initialement dans l'unité de commande d'une machine de drapage entre une tête de drapage 20 et une surface 30 d'un support de drapage. La figure 7B illustre la position réelle de la tête de drapage 20 lorsque celle-ci n'est pas équipée d'éléments de mesure de force ou pression d'appui et que la distance réelle entre la tête de drapage 20 et la surface du moule 30 est inférieure à la distance théorique initialement programmée. Dans ce cas, la tête de drapage exerce une force d'appui trop élevée par rapport à la force d'appui théorique visée, ce qui peut endommager le support de drapage lorsque celui-ci est fragile comme un matériau d'âme en nid d'abeille par exemple. Avec la machine de l'invention, les éléments de mesure de pression d'appui permettent d'ajuster la force d'appui exercée par la tête de drapage 20 de manière à obtenir un contact entre celle-ci et la surface 30 conforme au contact théorique de la figure 7A. La figure 7C illustre la position réelle de la tête de drapage 20 lorsque celle-ci n'est pas équipée d'éléments de mesure de force ou pression d'appui et que la distance réelle entre la tête de drapage 20 et la surface du moule 30 est supérieure à la distance théorique initialement programmée. Dans ce cas, la tête de drapage exerce une force d'appui insuffisante par rapport à la force d'appui théorique visée. Avec la machine de l'invention, les éléments de mesure de force ou pression d'appui permettent d'ajuster la force d'appui exercée par la tête de drapage 20 de manière à obtenir un contact entre celle-ci et la surface 30 conforme au contact théorique de la figure 7A.

Les figures 8A et 8B illustrent l'application d'un effort de compactage par une tête de drapage sur une portion de surface concave d'un support de drapage 50. La figure 8A illustre l'application d'un effort de compactage avec une tête de drapage 40 dépourvue d'une pluralité d'éléments de mesure de force ou pression d'appui comme dans la présente invention, la pression d'appui ne pouvant pas être mesurée localement à différents endroits de l'interface entre les premier et deuxième supports rigides. Comme illustré sur la figure 8A, on constate que, dans ce cas, seul le contact entre les bords de la pièce en matériau élastiquement déformable de la tête de drapage 40 est suffisant pour atteindre la force d'appui programmée dans la machine, ce qui résulte en une absence de contact et, par conséquent, d'application d'effort de compactage au niveau de la partie centrale de la pièce en matériau élastiquement déformable de la tête de drapage 40. Sur la figure 8B, l'effort de compactage est exercé par la tête de drapage 130 décrite précédemment qui comprend plusieurs éléments de mesure de force ou pression d'appui 134 répartis sur la zone de couplage entre les premier et deuxième supports rigides. Dans ce cas, il est possible de programmer l'application d'une force d'appui déterminée sur une ou plusieurs zones couvertes par un ou plusieurs éléments de mesure de pression d'appui 134. Dans le cas d'une surface concave, on programme et contrôle de préférence l'application d'une force d'appui à l'aide d'un ou plusieurs éléments de mesure de force ou pression d'appui situés au niveau de la partie centrale de la pièce en matériau élastiquement déformable de la tête de drapage 130, ce qui permet d'assurer l'application d'un effort de compactage sur l'ensemble de la portion de la surface du support 50 présente en regard de la pièce en matériau élastiquement déformable comme illustré sur la figure 8B.

Les figures 9A et 9B illustrent l'application d'un effort de compactage par une tête de drapage sur une portion de surface convexe d'un support de drapage 60. La figure 9A illustre l'application d'un effort de compactage avec une tête de drapage 40 dépourvue d'une pluralité d'éléments de mesure de force ou pression d'appui comme dans la présente invention, la pression d'appui ne pouvant pas être mesurée localement à différents endroits de l'interface entre les premier et deuxième supports rigides. Comme illustré sur la figure 9A, on constate que, dans ce cas, seul le contact entre la partie centrale de la pièce en matériau élastiquement déformable de la tête de drapage 40 est suffisant pour atteindre la force d'appui programmée dans la machine, ce qui résulte en une absence de contact et, par conséquent, d'application d'effort de compactage au niveau des bords de la pièce en matériau élastiquement déformable de la tête de drapage 40. Sur la figure 9B, l'effort de compactage est exercé par la tête de drapage 130 décrite précédemment qui comprend plusieurs éléments de mesure de force ou pression d'appui 134 répartis sur la zone de couplage entre les premier et deuxième supports rigides. Dans ce cas, il est possible de programmer l'application d'une force d'appui déterminée sur une ou plusieurs zones couvertes par un ou plusieurs éléments de mesure de force ou pression d'appui 134. Dans le cas d'une surface convexe, on programme et contrôle de préférence l'application d'une force d'appui à l'aide d'un ou plusieurs éléments de mesure de force ou pression d'appui situés au niveau des bords de la pièce en matériau élastiquement déformable de la tête de drapage 130, ce qui permet d'assurer l'application d'un effort de compactage sur l'ensemble de la portion de la surface du support 50 présente en regard de la pièce en matériau élastiquement déformable comme illustré sur la figure 9B.

La machine selon l'invention permet dans une même opération de draper et de compacter des plis sur tout type de support de drapage. La machine selon l'invention permet en outre un contrôle très précis de l'effort de compactage appliqué, et ce en termes à la fois de valeur d'effort et de zones d'application. La machine de l'invention est ainsi capable de mesurer l'effort appliqué et de l'ajuster en fonction d'un effort cible programmé. Ce contrôle de l'effort de compactage peut être réalisé sur des zones définies par un ou plusieurs éléments de mesure de la force ou pression d'appui. La machine selon l'invention permet donc d'asservir les moyens d'application de l'effort de compactage comme notamment le dispositif de manipulation robotisé de la tête de drapage et/ou des moyens d'actionnement (dispositifs de déplacement linéaire) présents dans la tête de drapage.

## Revendications

1. Machine de drapage et de compactage automatique (100) de plis (10) comprenant une tête de drapage (130) apte à saisir, déposer et compacter des plis sur un support de drapage (160), la tête de drapage comprenant un premier support rigide (131), une deuxième support rigide (132) et un préhenseur (133) comprenant une pièce de matériau élastiquement déformable (1333) présentant au moins une face (1333a) apte à saisir un pli et destinée à venir en appui contre une surface (160a) du support de drapage, le premier support rigide (131) étant relié à un dispositif de manipulation robotisé (140), le deuxième support rigide (132) étant relié, d'une part, au premier support rigide (131) et, d'autre part, au préhenseur (133),
la tête de drapage comprenant une pluralité d'éléments de mesure de force ou pression d'appui (134) interposés entre les premier et deuxième supports rigides (131, 132) ou logés dans le premier support rigide, la machine de drapage comprenant une unité de commande (150) reliée aux éléments de mesure de force ou pression d'appui (134), l'unité de commande étant configurée pour contrôler une force ou une pression d'appui de compactage appliquée par la tête de drapage (130), machine dans laquelle des éléments de mesure de force ou pression d'appui (134) sont répartis sur une zone de couplage (Zc) entre les premier et deuxième supports rigides (131, 132) et **caractérisée en ce que** des dispositifs de déplacement linéaire (235) sont présents dans la zone de couplage (Zc) entre les premier et deuxième supports rigides (231, 232), chaque dispositif de déplacement linéaire comprenant un capteur de position (234) correspondant à un élément de mesure de pression d'appui.

2. Machine selon la revendication 1, dans laquelle les éléments de mesure de force ou pression d'appui (134) correspondent à des capteurs de force.

3. Machine selon la revendication 1, dans laquelle le premier support rigide (331) comprend une pluralité de bras (3310) chacun reliés à une extrémité (3312) au dispositif de manipulation robotisé et à une autre extrémité (3311) au deuxième support rigide (332), chaque bras comprenant un élément de mesure de force ou pression d'appui (334).

4. Machine selon l'une quelconque des revendications 1 à 3, dans laquelle l'unité de commande (150) est configurée pour ajuster la force d'appui de compactage de la tête de drapage sur la surface du support ou du moule de drapage en fonction d'une force d'appui cible.

5. Machine selon la revendication 4, dans laquelle l'unité de commande (150) ajuste la force d'appui de compactage en fonction de la force d'appui mesurée par un ou plusieurs éléments de mesure déterminés.

## Patentansprüche

1. Automatische Auflege- und Verdichtungsmaschine (100) für Lagen (10), umfassend einen Auflegekopf (130), der geeignet ist, um Lagen auf einem Auflegeträger (160) zu ergreifen, abzulegen und zu verdichten, der Auflegekopf umfassend einen ersten starren Träger (131), einen zweiten starren Träger (132) und einen Greifer (133), umfassend ein elastisch verformbares Materialteil (1333), das mindestens eine Fläche (1333a) aufweist, die geeignet ist, um eine Lage zu ergreifen und dazu bestimmt ist, an einer Oberfläche (160a) des Auflegeträgers anzuliegen, wobei der erste starre Träger (131) mit einer robotisierten Handhabungsvorrichtung (140) verbunden ist, der zweite starre Träger (132) einerseits mit dem ersten starren Träger (131) und andererseits mit dem Greifer (133) verbunden ist,
der Auflegekopf umfassend eine Vielzahl von Kraft- oder Anpressdruck-Messelementen (134), die zwischen den ersten und den zweiten starren Träger (131, 132) eingefügt oder in dem ersten starren Träger untergebracht sind, wobei die Auflegemaschine eine Steuereinheit (150) umfasst, die mit den Kraft- oder Anpressdruck-Messelementen (134) verbunden ist, wobei die Steuereinheit konfiguriert ist, um eine von dem Auflegekopf (130) ausgeübte Verdichtungskraft oder einen Verdichtungsdruck zu steuern, wobei Kraft- oder Anpressdruck-Messelemente (134) auf einer Kopplungszone (Zc) zwischen den ersten und zweiten starren Trägern (131, 132) verteilt sind und
**dadurch gekennzeichnet ist, dass** in der Kopplungszone (Zc) zwischen dem ersten und dem zweiten starren Träger (231, 232) lineare Verstelleinrichtungen (235) vorhanden sind, jede lineare Verstelleinrichtung umfassend einen Positionssensor (234), der einem Anpressdruck-Messelement entspricht.

2. Maschine nach Anspruch 1, wobei die Kraft- oder Anpressdruck-Messelemente (134) Kraftsensoren entsprechen.

3. Maschine nach Anspruch 1, wobei der erste starre Träger (331) eine Vielzahl von Armen (3310) umfasst, die jeweils an einem Ende (3312) mit der robotisierten Handhabungsvorrichtung und an einem anderen Ende (3311) mit dem zweiten starren Träger (332) verbunden sind, jeder Arm umfassend ein Kraft- oder Anpressdruck-Messelement (334).

4. Maschine nach einem der Ansprüche 1 bis 3, wobei die Steuereinheit (150) konfiguriert ist, um die Verdichtungsanpresskraft des Auflegekopfs auf die Oberfläche des Trägers oder der Auflegeform abhängig von einer Soll-Anpresskraft anzupassen.

5. Maschine nach Anspruch 4, wobei die Steuereinheit (150) die VerdichtungsAnpresskraft abhängig von der durch eines oder mehrere bestimmte Messelemente gemessenen Anpresskraft anpasst.

## Claims

1. A machine for automatically draping and compacting (100) plies (10), comprising a draping head (130) able to grasp, deposit and compact plies on a draping support (160), the draping head comprising a first rigid support (131), a second rigid support (132) and a gripper (133) comprising a piece of elastically deformable material (1333) having at least one face (1333a) able to grasp a ply and intended to bear against a surface (160a) of the draping support, the first rigid support (131) being connected to a robotic handling device (140), the second rigid support (132) being connected, on the one hand, to the first rigid support ( 131) and, on the other hand, to the gripper (133),
the draping head comprising a plurality of bearing force or pressure measuring elements (134) interposed between the first and second rigid supports (131, 132) or housed in the first rigid support, the draping machine comprises a control unit (150) connected to the bearing force or pressure measuring elements (134), the control unit being configured to monitor a compaction bearing force or pressure applied by the draping head (130), wherein bearing force or pressure measuring elements (134) are distributed over the coupling area (Zc) between the first and second rigid supports (131, 132) and **characterized in that** linear displacement devices (235) are present in the coupling area (Zc) between the first and second rigid supports (231, 232), each linear displacement device comprising a position sensor (234) corresponding to a bearing pressure measuring element.

2. The machine according to claim 2, wherein the bearing force or pressure measuring elements (134) correspond to force sensors.

3. The machine according to claim 1, wherein the first rigid support (331) comprises a plurality of arms (3310) each connected at one end (3312) to the robotic handling device and at another end (3311) to the second rigid support (332), each arm comprising a bearing force or pressure measuring element (334).

4. The machine according to any one of claims 1 to 3, wherein the control unit (150) is configured to adjust the compaction bearing force of the draping head on the surface of the support or the draping mold according to a target bearing force.

5. The machine according to claim 4, wherein the control unit (150) adjusts the compaction bearing force according to the bearing force measured by one or several determined measuring elements.
